# EUROPEAN PATENT APPLICATION

(11) **EP 3 904 061 A1**
(43) Date of publication of application: **03.11.2021**
(21) Application number: 20275083.2
(22) Date of filing: 30.04.2020
(51) Int. Cl.: B29C 70/44

(54) **IMPROVEMENTS IN AND RELATING TO VACUUM FITTING OF ARTICLES**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

Disclosed is a method of attaching a first article to a second article comprising the steps of: providing an adhesive substance on at least one facing surface of the first and second articles; placing the first and second articles into a desired final position, relative to each other; positioning a flexible sheet over the first article, and secured to the second article, wherein the flexible sheet is provided with a vacuum hose connector; connecting a first end of a vacuum hose to the vacuum hose connector; and connecting a second end of the vacuum hose to a vacuum pump and operating the vacuum pump.

## Description

The present invention relates to improvements in the fitting or attachment of an article to another by means of a vacuum assembly.

It is sometimes required to fit a first article to a second article in such a way that the first article is required to be held in position, such that it is effectively forced into contact with the second article while a fixing agent, such as an adhesive, cures or hardens. In some situations, a clamp or other mechanical device can be used to maintain the relative positions of the first and second articles. However, in some situations, this is not possible and other techniques are employed.

In one example, the first article is a tile and the second article is an external surface of a vessel. However, there are a range of possible scenarios where two articles are required to be adhesively attached and the skilled person will readily appreciate many possible applications.

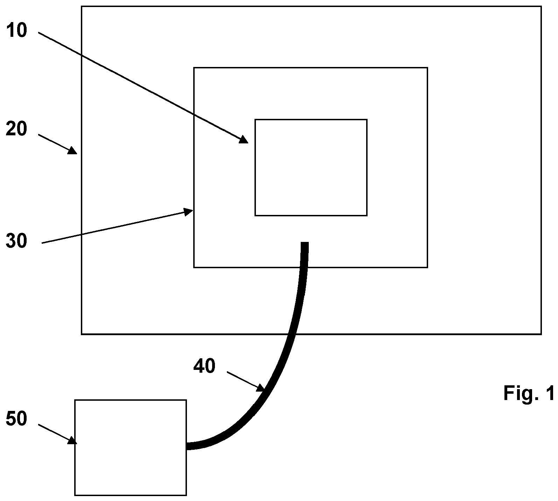

One such technique, known in the art, and shown in Figure 1 uses a vacuum assembly, whereby the first article 10 is brought into contact with the second article 20, and a flexible impervious sheet 30 is attached, covering the first article and adhered to the second article. The sheet 30 is attached by means of an adhesive substance which is applied in a continuous manner around the perimeter of the sheet such that an airtight seal can be created.

A vacuum hose 40 is interposed between the flexible sheet 30 and the surface of the second article 20 and a vacuum applied via a vacuum pump 50 attached to the hose 40. The vacuum thus created tends to force the flexible sheet 30 into close conformity with the first article10 and second article 20, thereby maintaining a suitable positioning while the adhesive cures.

A problem with such an arrangement is that the vacuum can fail for one of a number of reasons. These include: pump failure; pressure loss at the point where the vacuum hose is interposed between the sheet and the surface of the second article or at the perimeter more generally; or a small nick, puncture or tear in the flexible sheet 30. Unless the assembly is continuously monitored, any such failure may go unnoticed, resulting in a failed operation and possible loss of, or damage to, either or both of the first and second articles. In cases where the curing time is relatively long (e.g. a few hours), the failure of any one operation can delay an entire assembly program and waste valuable time, as well as possible damaging the parts in question.

It is an aim of embodiments of the present invention to address shortcomings in the prior art, whether mentioned explicitly herein or not.

According to the present invention there is provided an apparatus and method as set forth in the appended claims. Other features of the invention will be apparent from the dependent claims, and the description which follows.

According to a first aspect of the present invention, there is provided a method of attaching a first article to a second article comprising the steps of: providing an adhesive substance on at least one facing surface of the first and second articles; placing the first and second articles into a desired final position, relative to each other; positioning a flexible sheet over the first article, and secured to the second article, wherein the flexible sheet is provided with a vacuum hose connector; connecting a first end of a vacuum hose to the vacuum hose connector; and connecting a second end of the vacuum hose to a vacuum pump and operating the vacuum pump.

In an embodiment, there is further provided a breather material interposed between the first article and the flexible sheet.

In an embodiment, a monitoring apparatus is connected between the vacuum hose connector attached to the flexible sheet and the vacuum pump.

In an embodiment, the monitoring apparatus is operable to detect a drop in vacuum level and to initiate an alarm condition.

In an embodiment, a counter is started upon detection of the alarm condition.

According to a second aspect of the present intention, there is provided an apparatus for monitoring the method of the first aspect, wherein the apparatus is operable to detect a drop in vacuum level and to initiate an alarm condition accordingly.

In an embodiment, the apparatus is further operable to begin a count up timer upon detection of the alarm condition.

In an embodiment, there is provided a plurality of channels, each associated with one vacuum operation.

In an embodiment, there is provided an integral battery power source.

In an embodiment, there is provided a datalogger to record operational parameters.

In an embodiment, there is provided a wireless communication capability.

For a better understanding of the invention, and to show how embodiments of the same may be carried into effect, reference will now be made, by way of example, to the accompanying diagrammatic drawings in which:
Figure 1 shows a prior art vacuum fixing assembly;
Figure 2 shows a vacuum fixing assembly according to an embodiment of the present invention;
Figure 3 shows a representation of an apparatus according to an embodiment of the present invention; and
Figure 4 shows a flowchart of a method according to an embodiment of the present invention.

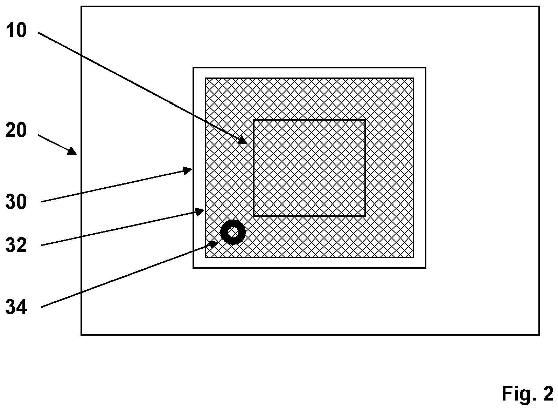

Figure 2 shows an embodiment of the present invention. Like numbered features are substantially the same throughout this document.

Here, the first article 10 is again placed against the surface of the second article 20, with an interposed layer of adhesive applied to one or both facing surfaces. As required.

Then, placed over the top of the first article and arranged to lie within the perimeter of the flexible sheet 30, there is further provided a sheet of breather material 32. The breather material 32 is a porous material having a network of apertures running through it, a little like a sponge material. The breather material 32 allows the vacuum to "spread" evenly and ensures that a substantially constant vacuum force is applied across the entire sheet 30. In the absence of the breather material, it is possible for kinks or creases in the sheet 30 to prevent the vacuum spreading across the entire area of the sheet 30.

Around the perimeter of the sheet 30 there is provided an adhesive substance to adhere the sheet 30 to the exposed surface of the second article 20. A suitable substance is Tacky Tape ®, a type of highly elastic butyl tape with high surface tack properties. This is found to provide the required airtight seal around the perimeter of the sheet.

Rather than feed a vacuum hose between the sheet 30 and the second article and then seal around it, as in the prior art, the embodiment shown in Figure 2 provides a vacuum hose connector 34 pre-fitted to the sheet 30. The vacuum connector is of a known type, such as a quick release vacuum coupling set, supplied by multiple manufacturers, including Easy Composites (www.easycomposites.co.uk). It is typically of a push-fit (dry-break) connection, allowing for easy connection and disconnection, thereby minimising any stresses on the flexible sheet 30.

Once the required time has elapsed, then the vacuum hose can be disconnected and the flexible sheet can be removed, as well as the breather material. The first and second articles are now securely adhered, and the vacuum apparatus may be used to secure the next article.

A further issue highlighted in the prior art is the effect of a loss of vacuum and the resulting issues this can cause with the quality of the adhesion process. In the worst case, it can fail altogether. However, it is possible that a partial loss of vacuum will not result in the total failure but may result in a sub-optimal adhesion which is not immediately apparent.

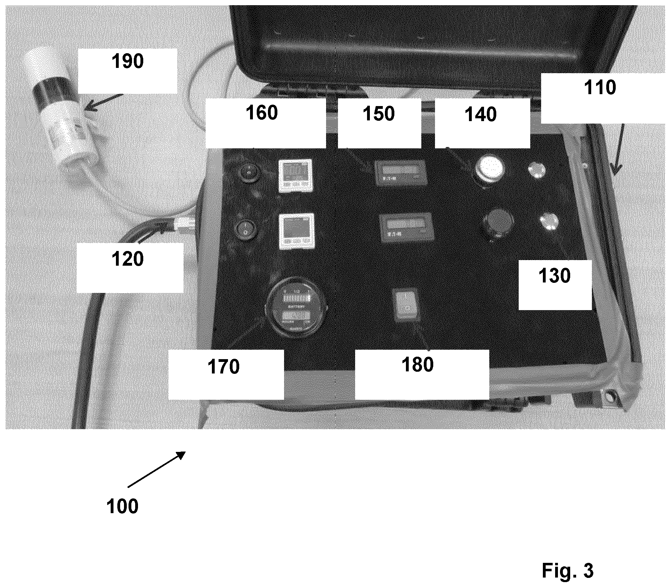

In a further embodiment of the invention, there is provided a portable vacuum apparatus 100, shown in Figure 3, which can control and monitor the vacuum fitting operation described earlier. The portable apparatus allows standalone operation of, in this instance, two vacuum channels, meaning that two vacuum fitting operations can be performed and monitored simultaneously, controlled from the apparatus 100.

The apparatus 100 has a pair of vacuum input ports 110, for connection to a vacuum pump, shown here on the right-hand side of the case housing the apparatus. On the left-hand side, there are a pair of vacuum output ports 120, for connection to the connector provided on the flexible sheet 30. Here, one channel is shown connected to a hose.

Between the input and out ports, there are various controls and indicators relevant to the respective vacuum channel. There is a failure indicator 140, which operates if the particular vacuum channel experiences a loss of vacuum. There is a timer 150 which is operable to monitor the time elapsed since a vacuum failure event was triggered. A vacuum level indicator 160 is provided so that the vacuum level for that channel can be monitored in relation to predefined boundaries in the form of upper and lower tolerance values. Each channel has a reset button 130 which zeroes or resets the timer 150 associated with that channel.

A battery level indicator 170 is provided to monitor the charge level of the integral rechargeable battery (not shown). A master on/off switch 180 controls power to all circuits. An external alarm indicator/sounder/beacon 190 may also be provided to attract attention.

In use, an external vacuum pump is connected to the input port 110 and the air is evacuated from under the sheet 30. Once the required level of vacuum is achieved, as indicated by indicator 160, the vacuum pump may be disconnected, and the integrity of the system can be tested. If the vacuum is holding and there is no ingress of air into the system, then a timer (not shown) may be started and the system left as-is for the required curing time.

The apparatus 100 can then be left in-situ, monitoring two vacuum channels simultaneously. Sufficient charge is provided in the integral battery for a number of cycles of operation and the battery may be specified accordingly. The external alarm 190 may be used if the site is remote from personnel if, for instance, the environment in which the operation is taking place is unsafe or noisy.

The apparatus 100 may further be provided with additional operational functionality in the form of a data logger, to record details of each vacuum cycle for quality control purposes. This may be achieved by integration of e.g. a laptop computer or customised circuitry, as required. The apparatus 100 may also be provided with wireless capability so that data can be transmitted to a remote location. This can be effected by means of Low Power RF (e.g. Bluetooth ®) for relatively nearby communications or Wi-Fi or cellular capability for relatively more distant locations.

The timer 150 counts up in minute increments so that the elapsed time since a vacuum failure is recorded. In this way, an operator is able to determine if the adhesion process can be salvaged, perhaps if less than a certain time has elapsed. If, however, more than a certain time has passed, the process should be abandoned and started again, possibly with new parts.

The vacuum alarm indicator 140 may be programmed to trigger in response to a predefined drop in vacuum level. A typical range within which an alarm may be triggered is 0 - 14.7 psi (0 - 101.35 KPa).

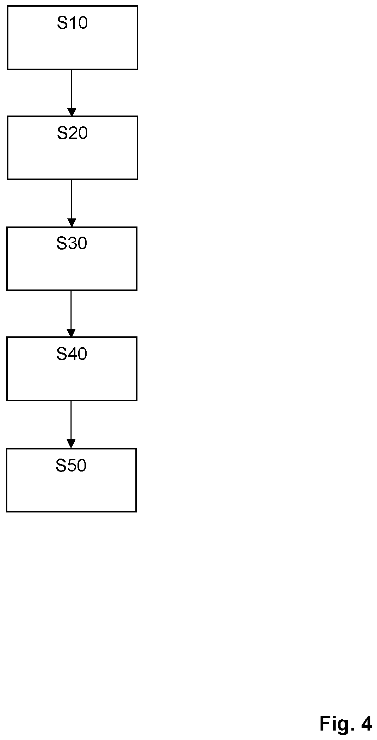

For the sake of completeness, Figure 4 shows a flowchart illustrating the steps according to an embodiment of the invention.

Step S10 is the provision of an adhesive substance on at least one facing surface of the first and second articles. The adhesive chosen will depend on the particular articles to be secured and their eventual mode of operation. Typically, an adhesive requires time and certain environmental conditions to cure and become fully effective.

Step S20 is the placing of the first 10 and second 20 articles into a desired final position, relative to each other. Some form of temporary support may required at this stage.

Step S30 is the positioning of a flexible sheet 30 over the first article 10, and secured to the second article 20, wherein the flexible sheet is provided with a vacuum hose connector 34.

Step S40 is the connection of a first end of a vacuum hose to the vacuum hose connector.

Step S50 is the connection of a second end of the vacuum hose to a vacuum pump and operating the vacuum pump.

Embodiments of the present invention are able to provide a more reliable means of establishing and monitoring a vacuum fitting process, whereby the integrity of the process is improved in the first instance and, if a fault should occur, an operator is informed immediately and able to take restorative action if necessary. Furthermore, datalogging of the process may be used to assist in quality control activities.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of attaching a first article to a second article comprising the steps of:
providing an adhesive substance on at least one facing surface of the first and second articles;
placing the first and second articles into a desired final position, relative to each other;
positioning a flexible sheet over the first article, and secured to the second article, wherein the flexible sheet is provided with a vacuum hose connector;
connecting a first end of a vacuum hose to the vacuum hose connector; and
connecting a second end of the vacuum hose to a vacuum pump and operating the vacuum pump.

2. The method of claim 1 further comprising the provision of a breather material interposed between the first article and the flexible sheet.

3. The method of claim 1 or 2 wherein a monitoring apparatus is connected between the vacuum hose connector attached to the flexible sheet and the vacuum pump.

4. The method of claim 3 wherein the monitoring apparatus is operable to detect a drop in vacuum level and to initiate an alarm condition.

5. The method of claim 4 wherein a counter is started upon detection of the alarm condition.

6. Apparatus for monitoring the method of any preceding claim, wherein the apparatus is operable to detect a drop in vacuum level and to initiate an alarm condition accordingly.

7. The apparatus of claim 6 wherein the apparatus is further operable to begin a count up timer upon detection of the alarm condition.

8. The apparatus of claim 6 or 7 comprising a plurality of channels, each associated with one vacuum operation.

9. The apparatus of any of claims 6 to 8 comprising an integral battery power source.

10. The apparatus of any of claims 6 to 9 further comprising a datalogger to record operational parameters.

11. The apparatus of any of claims 6 to 10 further comprising wireless communication capability.
